# EUROPÄISCHE PATENTSCHRIFT

(11) **EP 3 582 656 B1**
(45) Veröffentlichungstag und Bekanntmachung des Hinweises auf die Patenterteilung: **07.06.2023**
(21) Anmeldenummer: 17821620.6
(22) Anmeldetag: 20.12.2017
(51) Int. Cl.: A47G 1/04, A47B 67/00, A47G 1/00

(54) **SPIEGELVORRICHTUNG ZUR BETRACHTUNG EINER PERSON IN EINEM SPIEGEL, VERFAHREN ZUR HERSTELLUNG EINER SPIEGELVORRICHTUNG UND VERFAHREN ZUM BETRACHTEN EINER PERSON IN EINER SPIEGELVORRICHTUNG**
ILLUMINATED MIRROR AND ITS MANUFACTURING METHOD AND MEHOD OF USE
MIRROR ILLUMINÉ AVEC SA MÉTHODE DE FABRICATION ET SA METHODE D'ULTISATION

(30) Priorität: 17.02.2017 EP 17156592
(43) Veröffentlichungstag der Anmeldung: 25.12.2019
(73) Patentinhaber: Gerig Design AG, 3400 Burgdorf (CH)
(72) Erfinder: GERIG, Thomas, 3400 Burgdorf (CH)
(74) Vertreter: Hepp Wenger Ryffel AG
(86) Internationale Anmeldenummer: PCT/EP2017/083705
(87) Internationale Veröffentlichungsnummer: WO 2018/149541

(56) Entgegenhaltungen:
- CN-U- 204 091 280
- DE-A1- 2 533 951
- FR-A- 837 915
- GB-A- 860 921
- JP-A- H1 170 039
- JP-A- H04 122 209
- US-A- 3 745 325

## Beschreibung

Die Erfindung richtet sich auf eine Spiegelvorrichtung zur Betrachtung einer Person in einem Spiegel, ein Verfahren zur Herstellung einer Spiegelvorrichtung sowie ein Verfahren zum Betrachten einer Person in einer Spiegelvorrichtung gemäss dem Oberbegriff der unabhängigen Ansprüche.

Aus dem Stand der Technik sind Spiegelvorrichtungen bekannt, die bereits Beleuchtungsvorrichtungen aufweisen. Derartige Beleuchtungsvorrichtungen dienen vor allem dem Ausleuchten der Person vor dem Spiegel oder zusätzlich zur Ausleuchtung des Raumes. Problematisch bei all diesen Spiegelvorrichtungen mit Beleuchtung sind einerseits die Blendung durch direktes Licht und andererseits der Lichtverlust durch eventuelle Abdeckungen.

So ist beispielsweise in der US 1,868,104 eine Spiegelvorrichtung offenbart, die drei Spiegelflächen umfasst, wobei hinter den äusseren Spiegelflächen jeweils Leuchtmittel angebracht sind. Das Licht wird über fokussierende Reflektoren direkt auf den Benutzer gelenkt. Dadurch wird ein Benutzer geblendet und die Person vor dem Spiegel wird nicht optimal ausgeleuchtet.

Auch aus der JP2006-340877 ist eine beleuchtete Spiegelschrankvorrichtung bekannt, bei der eine mittlere Spiegelplatte aus einem Schrank hervorgezogen wird und der Lichtquellen hinter dieser hervorziehbaren Platte befinden. Das Licht wird über Spiegel seitlich der mittleren Spiegelvorrichtung direkt in die Augen des Betrachters gelenkt, so dass dieser geblendet wird, sobald er in Richtung des mittleren Spiegels blickt. Weiterhin ist der Aufbau des Spiegels durch die Schiebevorrichtungen extrem komplex.

Aus der DE 102005026594 ist eine Beleuchtungseinrichtung für Spiegel bekannt, die hinter der Spiegelfläche angebracht ist, wobei ein runder Reflektor um die Lichtquelle herum angeordnet ist, der das Licht direkt auf die Spiegelfläche lenkt. Der Reflektor hat fokussierende Eigenschaften und führt somit zu harten Schatten. JP H11 70039 A offenbart eine weitere Spiegelvorrichtung aus dem Stand der Technik.

Es ist daher Aufgabe der vorliegenden Erfindung die Nachteile des Standes der Technik zu vermeiden und ein Spiegelvorrichtung, ein Verfahren zur Herstellung einer Spiegelvorrichtung sowie ein Verfahren zum Betrachten einer Person in eine Spiegelvorrichtung zu schaffen, die eine optimale Ausleuchtung der Person sowie eine einfache Konstruktion der Spiegelvorrichtung wie auch ein elegantes Erscheinungsbild zu schaffen.

Die Aufgabe wird durch eine Spiegelvorrichtung nach Anspruch 1 gelöst.

Eine derartige Spiegelvorrichtung führt zu einer optimalen Ausleuchtung der Person vor der Spiegelvorrichtung ohne Schattenwürfe.

Der Reflektor mit seiner Diffusoroberfläche führt zu einer diffusen und homogenen Reflektion des Lichtes im Wesentlichen ohne Lichtverluste. Hierbei kann die Diffusoroberfläche bewusst strukturiert und/oder mattiert und/oder geätzt sein. Eine Ätzung kann mit Schaum oder liquidem Ätzmittel erzielt werden. Die der Diffusoroberfläche gegenüberliegende Oberfläche weist reflektierende Eigenschaften auf, insbesondere eine spiegelnde Oberfläche, bevorzugt eine Silberoberfläche.

Ein Reflektor in einer Ebene mit einem Betrachtungsbereich bedeute im Rahmen der Erfindung, dass Reflektor und Betrachtungsbereich entweder aus einem Glas bestehen, wobei die Oberflächenbehandlung unterschiedlich ist oder dass ein Betrachtungsbereich auf dem Reflektor aufgebracht, beispielsweise aufgeklebt ist. Der Betrachtungsbereich kann dabei jegliche Form annehmen, beispielsweise rund, dreieckig, viereckig oder mehreckig oder oval. Der Betrachtungsbereich kann neben oder im Reflektor angeordnet sein.

Ein Betrachtungsbereich hinter der Lichtquelle bedeutet im Rahmen der Erfindung, dass der Betrachtungsbereich aus Sicht einer Person vor der Spiegelvorrichtung hinter der oder den Lichtquellen angeordnet ist. Um keine direkten Reflektionen über den Betrachtungsbereich auf die Person auszulösen muss eine weitere Abschirmung zwischen jeder Lichtquelle und dem Betrachtungsbereich ausgebildet sein. Das Licht der Lichtquelle(n) wird bevorzugt ausschliessliche auf die Diffusoroberfläche gerichtet.

Die Diffusoroberfläche weist Kavitäten, insbesondere konkave Strukturen, auf, die bevorzugt uneinheitlich, insbesondere bevorzugt zufällig verteilt ausgebildet sind.

Derartige konkave Strukturen führen zu einer optimalen Diffusion und Homogenisierung des Lichtes und somit zu wenig Lichtverlust und wenig Schattenwürfen im Auge des Betrachters.

Die konkaven Strukturen müssen hierbei nicht unbedingt optimale Rundungen aufweisen, sondern können auch in der Rundung Unebenheiten aufweisen, wie sie beispielsweise durch Ätzen mit liquidem Ätzmittel entstehen. Im Rahmen der Anmeldung uneinheitlich heisst dass die konkaven Strukturen unterschiedlich tief und unterschiedlich gross ausgebildet sind. Bevorzugt weisen die konkaven Strukturen Kanten zwischeneinander auf, die durch Ecken begrenzt sind. Insbesondere können mehr als sechs, bevorzugt sieben Ecken pro Kavität ausgebildet sein. Die konkaven Strukturen werden bevorzugt in ein Glas geätzt, insbesondere durch einen Ätzschaum auf die Oberfläche des Glases aufgebracht. Somit entsteht eine Milchglasoberfläche mit konkaven Strukturen die für eine optimale Diffusion des Lichtes besorgt. Die Kavitäten haben bevorzugt maximale Ausdehnungen von im Wesentlichen 200 µm, wobei die minimale Ausdehnung bei 10 µm, insbesondere 20 um weiter insbesondere 40 um liegt. Die Tiefe der Kavitäten liegt bevorzugt im Bereich von 5 - 30 µm, bevorzugt 3-10 um.

Der Reflektor ist plan ausgebildet und weist eine Reflektionsschicht auf, , die insbesondere einen Abstand zur Diffusor-Oberfläche aufweist, der kleiner als 1cm, insbesondere kleiner als 0.8cm ist.

Ein plan ausgebildete Reflektor verhindert Fokussierung des Lichtes und somit ein Blenden der Person vor der Spiegelvorrichtung. Eine Reflektionsschicht des Reflektors führt zu weniger Lichtverlust und somit einer helleren Reflektion. Ein kleinerer Abstand als 1cm zwischen Reflektionsschicht und Diffusoroberfläche führt zu einem stabilen und dennoch leichten und leicht montierbaren Reflektor. Der Reflektor umfasst vorzugsweise ein Weissglas, um keinerlei farbliche Veränderungen des erzeugten Lichtes im Reflektor zu erzeugen. Bei erwünschter farbiger Anpassung ist selbstverständlich auch ein farbiges Glas denkbar. Die Reflektionsschicht ist bevorzugt eine Silberschicht, die insbesondere zusätzlich mit einer Schutzschicht auf der Rückseite versehen ist. Der Aufbau des Reflektors umfasst daher eine Schutzschicht, eine Reflektionsschicht und eine Glasschicht, wobei die Glasschicht die Diffusoroberfläche umfasst.

Alternativ kann auf die Schutzschicht eine zweite Reflektionsschicht und eine weitere Glasschicht aufgebracht werden, so dass ebenfalls die Rückseite als Spiegel verwendbar ist. Die beiden Schutzschichten sind in diesem Fall bevorzugt mit einer Verbindungsschicht verbunden, insbesondere mit einer Klebeschicht verklebt.

Die Längenausdehnung des Reflektors L_{R} kann grösser sein als ein Viertel des Abstandes des Reflektors von der Lichtquelle, bevorzugt grösser als die Hälfte des Abstandes des Reflektors von der Lichtquelle, bevorzugt im Wesentlichen der Hälfte des Abstandes des Reflektors von der Lichtquelle entsprechen. Ein Abstand von der Lichtquelle zum Reflektor kann grösser sein als die Längenausdehnung des Reflektors, bevorzugt länger als das doppelte der Längenausdehnung L_{R}.

Somit entsteht genug Reflektorfläche um eine ausreichende Diffusorlichtverteilung zu erreichen. Die Ausdehnung des Reflektors verläuft hierbei entlang einer Achse die senkrecht zur Höhlenausdehnung der Spiegelvorrichtung im gebrauchsfertigen Zustand entspricht.

Der Abstand des Reflektors von der Lichtquelle kann mindestens 20cm, bevorzugt mindestens 40 cm, betragen.

Ein derartiger Abstand führt zu der Möglichkeit einer indirekten, seitlichen Beleuchtung einer Person ohne Blendung.

Der Reflektor, insbesondere der Flügel, ist beweglich, bevorzugt um eine Hochachse drehbar, mit einer Rückwand oder einem Korpus der Spiegelvorrichtung verbunden.

Somit kann der Benutzer die Position des Reflektors selber bestimmen und somit eine optimale Ausleuchtung für sich erzielen. An der Rückwand und/oder am Korpus können eine oder mehrere Beleuchtungseinrichtung derart angeordnet sein, dass der Raum indirekt beleuchtbar ist und bevorzugt im Wesentlichen kein direktes Licht auf eine Person vor der Spiegelvorrichtung in einem montierten Zustand gelangt, wobei insbesondere die eine oder mehrere Beleuchtungseinrichtungen in einer Nut versenkt angeordnet sind.

Somit wird auch bei Beleuchtung des Raumes ein angenehmes indirektes Licht erzeugt.

Lichtquelle und Beleuchtungseinrichtung können jegliche Art von Lichtquellen sein so beispielsweise Glühbirnen, Leuchtstoffröhren, Halogenleuchten, LEDs, OLEDS oder andere Lichtquellen. Weiterhin können die Beleuchtungseinrichtungen auch farblich einstellbar sein oder/und unterschiedliche Farben aufweisen. Dies gilt auch für die Lichtquellen. Somit können unterschiedliche Stimmungen erzeugt werden, was insbesondere bei den Beleuchtungseinrichtungen von Bedeutung ist.

Durch ein Bewegen des Reflektors, insbesondere des Flügels, kann ein Schalter derart betätigbar sein, dass bei Öffnen des Spiegelvorrichtung die Lichtquelle einschaltet, bevorzugt mit einer Dimmschaltung, und/oder beim Schliessen der Spiegelvorrichtung die Lichtquelle ausschaltet, bevorzugt mit einer Dimmschaltung.

Somit wird die Beleuchtung ausschliesslich verwendet, wenn der Reflektor bewegt und somit die Spiegelvorrichtung geöffnet wurde. Dies führt zu einer energiesparendenden Verwendung der Lichtquelle.

Der Schalter kann hierbei jegliche bekannte Art von Schalter sein, wie beispielsweise mechanische Schalter, Magnetschalter, Induktivschalter oder Bewegungsmelder. Weiterhin wäre auch ein optischer Schalter denkbar. Eine Dimmschaltung sorgt für ein langsames Einschalten der Lichtquelle und somit für ein angenehmeres Einschalten, da keine plötzlichen Helligkeitsveränderungen auf die Augen einwirken, die zu einer unmittelbaren Reaktion der Pupille führen.

Eine Rückseite des Reflektors, bevorzugtes Flügels, kann zumindest teilweise durch einen Spiegel gebildet sein.

Somit kann die Spiegelvorrichtung auch als Spiegel verwendet werden, wenn der Reflektor nicht verwendet wird sondern ausschliesslich das Raumlichts zur Beleuchtung dient.

Die Rückseite des Reflektors bzw. des Flügels ist im Rahmen dieser Erfindung, die Seite, die im geschlossenen Zustand der Spiegelvorrichtung im Raum sichtbar ist. Somit ist die Vorderseite der Reflektor bzw. der Flügel und die Rückseite ein Spiegel.

Es können zwei Lichtquellen, bevorzugt hinter einer gemeinsamen Abschirmung, die insbesondere bevorzugt ein Betrachtungsbereich ist, zwei Reflektoren und bevorzugt zwei Rückseitenbetrachtungsbereiche, jeweils in einer Ebene mit einem Reflektor, ausgebildet: sein.

Somit können die jeweiligen Personen vor der Spiegelvorrichtung gleichmässig von beiden Seiten beleuchtet werden und sich gleichzeitig in Betrachtungsbereich sehen. Dies führt zu natürlichen Spiegelbildern ohne harte Schatten auf irgendeiner Seite.

Der Reflektor oder der Betrachtungsbereich können einen Vergrösserungsspiegel umfassen.

Somit kann die Person gleichzeitig ein vergrössertes Spiegelbild ansehen. Der Vergrösserungsspiegel kann hierbei auf den Reflektor oder den Betrachtungsbereich aufgebracht, wie beispielsweise aufgeklebt sein, oder in dasselbe Glas wie der Reflektor oder der Betrachtungsbereich eingebracht worden sein.

Die Spiegelvorrichtung kann eine Korpus umfassen, der zumindest eine Seitenwand aufweist, an der ein Reflektor angeordnet oder befestigt ist und eine der Seitenwand gegenüberliegende Leuchtenwand aufweisen, in der die Lichtquelle angeordnet ist, bevorzugt in eine Nut angeordnet ist. Der Reflektor kann fix an der Seitenwand angebracht sein.

Der Reflektor ist hierbei bevorzugt über eine Drehachse an der Seitenwand befestigt und ist somit einstellbar bezüglich des Winkels zur Seitenwand. Durch eine Nut für die Lichtquelle in der Leuchtenwand, wird bereits ein direktes Anleuchten einer Person vor der Spiegelvorrichtung durch die Nut verhindert. Weiterhin ist es möglich, dass die Lichtquelle in der Nut durch einen lichtdurchlässigen Diffusor bereits gestreut wird, wobei hierbei bevorzugt ein Diffusor verwendet wird, der zu möglichst wenig Helligkeitsverlust führt. Der Korpus ist hierbei derartig ausgebildet, dass die Spiegelvorrichtung gleichzeitig als Schrank dient und Gegenstände in den Korpus beispielsweise auf Tablaren, die zwischen Seitenwand und Leuchtenwand angeordnet sind, abgelegt werden können.

Es können zwei oder mehr Seitenwände und zwei oder mehr Leuchtendwände ausgebildet sein, wobei die Anzahl der Seitenwände der Anzahl der Leuchtenwände entspricht.

Somit können mehrere Personen dieselbe Spiegelvorrichtung verwenden.

Bevorzugt entspricht somit auch die Anzahl der Seitenwände der Anzahl der Reflektoren oder Flügel, so dass eine optimale Ausleuchtung möglich wird.

Die Spiegelvorrichtung kann ein Spiegelschrank für ein Badezimmer sein. Alternativ kann die Spiegelvorrichtung ein Spiegel in einer Umkleidekabine oder einem Kleiderschrank sein.

Zur Lösung der Aufgabe führt weiterhin ein Verfahren nach Anspruch 11.

Ein derartiges Verfahren führt zu der Herstellung einer Spiegelvorrichtung die eine optimale Ausleuchtung des vor dem Spiegel befindlichen Objekt wie beispielsweise einer Person führt.

Der Abstand A ist bevorzugt grösser als 20cm insbesondere grösser als 40cm insbesondere bevorzugt im Wesentlichen 40cm.

Zur Lösung der Aufgabe führt weiterhin ein Verfahren nach Anspruch 12.

Mit einem derartigen Verfahren wird die Person vor dem Spiegel optimal ausgeleuchtet und es entstehen keine harten Schatten im Gesicht der Person.

Nachfolgend wird die Erfindung anhand von Figuren näher erleuchtet hierbei zeigt:
- Figur 1: Eine erste Ausführungsform der Spiegelvorrichtung;
- Figur 2: Eine zweite Ausführungsform der Spiegelvorrichtung;
- Figur 3: Eine alternative Ausführungsform der Spiegelvorrichtung gemäss Figur 2;
- Figur 4: Eine alternative Ausführungsform der Spiegelvorrichtung gemäss Figur 1;
- Figur 5: Eine weitere Ausführungsform der Spiegelvorrichtung gemäss Figur 4 für zwei Personen;
- Figur 6: Ein Spiegelschrankmodul gemäss der Erfindung mit einer Reflektorscheibe;
- Figur 7: Ein Spiegelschrank gemäss der Erfindung mit einem Reflektor und einer Betrachtungsfläche;
- Figur 8: Eine weitere Ausführungsform der Spiegelvorrichtung aus Figur 6;
- Figur 9: Eine weitere Ausführungsform der Spiegelvorrichtung aus Figur 7;
- Figur 10: Eine alternative Ausführungsform der Spiegelvorrichtung aus Figur 8;
- Figur 11: Eine weitere alternative Ausführungsform der Spiegelvorrichtung aus Figur 9;
- Figur 12: Eine mikroskopische Aufnahme einer Diffusoroberfläche;
- Figur 13: Eine zweite mikroskopische Aufnahme einer Diffusoroberfläche;
- Figur 14: Eine dritte mikroskopische Aufnahme einer Diffusoroberfläche;
- Figur 15: Eine alternative Ausführungsform einer Spiegelvorrichtung mit zwei Betrachtungsbereichen;
- Figur 16: Eine alternative Ausführungsform einer Spiegelvorrichtung aus Figur 16 mit nur einem Betrachtungsbereich;
- Figur 17: Eine Schnittdarstellung durch eine Diffusoroberfläche mit Spiegelrückseite.

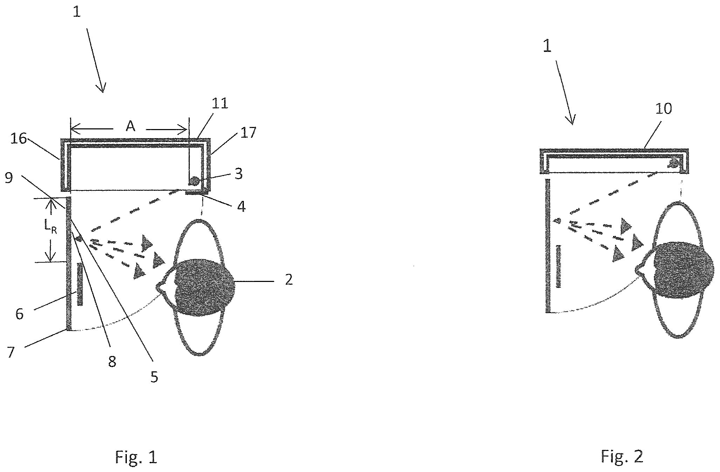

Figur 1 zeigt eine schematische Darstellung einer Spiegelvorrichtung 1 in Form eines Spiegelschrankes. Die Spiegelvorrichtung umfasst eine Leuchtquelle 3, eine Abschirmung 4 sowie einen Reflektor 5. Die Lichtquelle 3 ist hierbei bevorzugt in einer Nut in der Leuchtenwand 17 angeordnet. Weiterhin ist die Lichtquelle 3 in der Nut durch eine Diffusorscheibe abgedeckt. Für den Fall, dass die Lichtquelle 3 in einer Nut angeordnet ist, bildet die Seitenwand der Nut die Abschirmung 4. Andernfalls ist eine zusätzliche Abschirmung 4 ausgebildet. Die Lichtquelle 3 strahlt somit Licht auf den Reflektor 5 der wiederum das Licht auf die Person 2 reflektiert. Die Abschirmung 4 ist zwischen Lichtquelle 3 und Person 2 angeordnet, so dass kein direktes Licht von der Lichtquelle 3 zu Person 2 gelangen kann. Die Lichtquelle 3 ist bevorzugt eine LED. Der Reflektor 5 weist eine Diffusoroberfläche 8 auf, die das Licht von der Lichtquelle 3 streut. Hierzu weist die Diffusoroberfläche 8 Kavitäten, insbesondere konkaven Kavitäten, auf, die unterschiedlich gross und unterschiedlich tief ausgebildet sind, so dass das Licht zufällig gestreut wird. Der Reflektor 5 weist gegenüberliegend von der Diffusoroberfläche 8 eine Reflektionsschicht 9 auf, die bevorzugt aus einer Silberschicht besteht. Ein derartiger Reflektor weist wenig Lichtverlust auf, und führt zu einem weichen, schattenfreien Licht. Die Spiegelvorrichtung 1 umfasst weiterhin einen Korpus 11, der als Schrank zur Aufnahme von Gegenständen ausgebildet ist. Hierzu kann der Korpus 11 Tablare umfassen. Der Korpus 11 umfasst die Seitenwand 16 und die Leuchtenwand 17 sowie eine Rückwand. An der Seitenwand 16 ist der Reflektor 5 über ein Drehscharnier befestigt. Somit kann der Reflektor 5 auf- und zugeklappt werden. Der Reflektor 5 bildet zusammen mit dem Betrachtungsbereich 6 den Flügel 7. Der Betrachtungsbereich 6 ist der Bereich, in dem die Person 2 sich im Spiegel betrachten kann. Der Betrachtungsbereich kann auf den Reflektor aufgeklebt oder Teil des Reflektors 5 sein, wobei der Bereich zum Betrachten keine Diffusoroberfläche 8 umfasst. Die Spiegelvorrichtung 1 ist in einer geöffneten Position gezeigt. Der Abstand A zwischen Lichtquelle 3 und Reflektor 5 ist grösser als die Längenausdehnung L_{R} des Reflektors 5. Die Details dieser Spiegelvorrichtung sind in den folgenden Figuren ebenfalls dargestellt, so dass diese nachfolgend nicht nochmalig beschrieben werden.

Figur 2 entspricht Figur 1 mit dem Unterschied, dass kein Korpus 11 vorhanden ist sondern eine Rückwand 10. Der Rückwand 10 kann ein Spiegel sein, so dass mehrere Betrachtungsbereiche vorhanden sind. Eine derartige Spiegelvorrichtung 1 kann beispielsweise in Umkleidekabinen oder als Ganzkörperspiegel in privaten Haushalten verwendet werden.

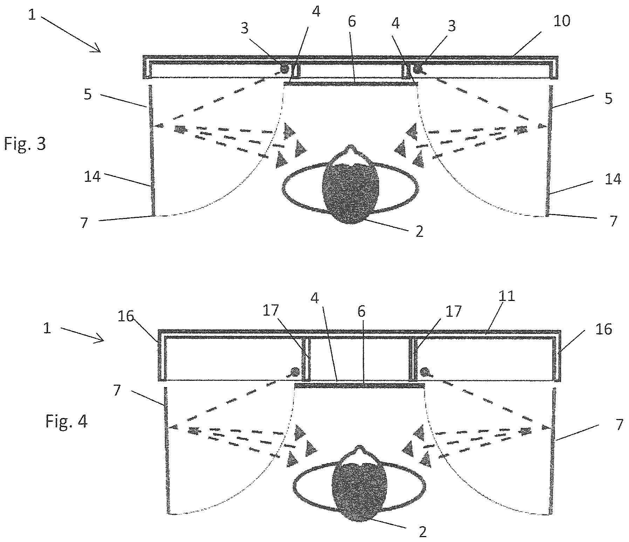

Figur 3 zeigt eine alternative Ausführungsform der Spiegelvorrichtung 1 gemäss Figur 2. Hierbei weist die Spiegelvorrichtung 1 zwei Lichtquellen 3 auf, die hinter einer gemeinsamen Abschirmung 4 angeordnet sind. Die Abschirmung 4 ist gleichzeitig die Betrachtungsfläche 6, in der sich die Person 2 im Spiegel betrachten kann. Die Lichtquellen 3 strahlen jeweils Licht auf einen Reflektor 5 eines Flügels 7 ab. Der Reflektor 5 reflektiert das Licht seitlich auf die Person 2. Gleichzeitig umfasst der Flügel 7 jeweils einen Rückseitenbetrachtungsbereich 14, in dem sich die Person 2 mit Hilfe der anderen vorhandenen Betrachtungsbereiche 6, 14 von hinten betrachten kann. Beide Flügel 7 sind drehbar befestigt und können geöffnet und geschlossen werden. Die Darstellung entspricht der geöffneten Position. Im geschlossenen Zustand fügen sich die Flügel 7 mit der Betrachtungsfläche 6 zu einer gemeinsame Spiegelfläche zusammen. Die Flügel 7 weisen hierzu auf der Rückseite eine Spiegelfläche auf. Die Rückseite entspricht der Diffusoroberfläche 8 gegenüberliegenden Seite des Flügels 7.

Figur 4 zeigt eine analog zu Figur 3 angepasste Version des Spiegelschrankes aus Figur 1. Hierbei sind zwei Leuchtenwände 17 und zwei Seitenwände 16 ausgebildet sowie ein Korpus 11. Der Korpus 11 kann somit Gegenstände aufnehmen, beispielsweise auf Tablaren angeordnet werden können. Die Seitenwände 16 sind mit dem Flügel 7 drehbeweglich verbunden. Somit können beide Flügel 7 geöffnet und geschlossen werden.

In beiden Figuren 3 und 4 können die Flügel 7 derartig ausgestaltet sein, dass sie den Betrachtungsbereich 6 im geschlossenen Zustand überlappen. Hierzu würde jeder Flügel 7 jeweils um die Hälfte der Ausdehnung des Betrachtungsbereiches 6 verlängert werden, so dass die freien Enden der Flügel 7 im geschlossenen Zustand im Wesentlichen aneinander anstossen und den Betrachtungsbereich 6 verdecken.

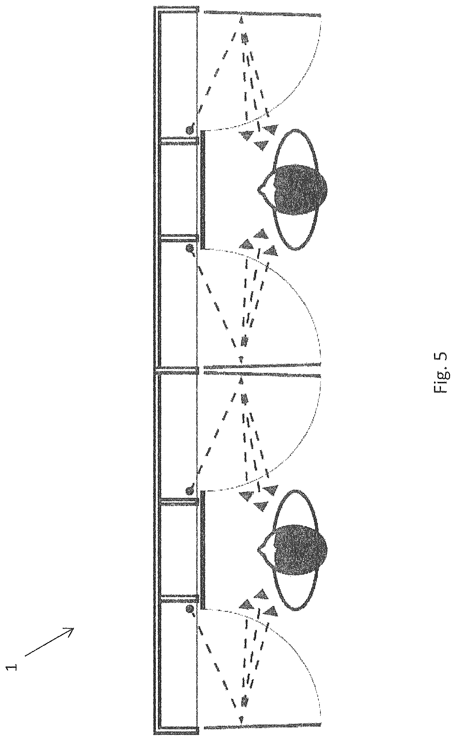

Figur 5 zeigt eine Kombination von zwei Spiegelvorrichtungen 1 gemäss Figur 4. Somit können zwei Personen gleichzeitig ein optimal ausgeleuchtetes Spiegelbild von sich betrachten.

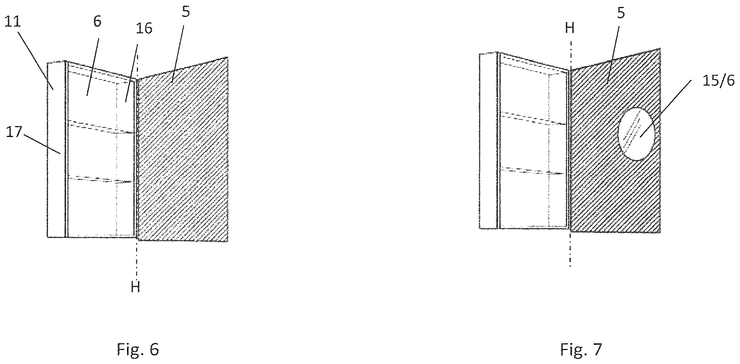

Figur 6 zeigt ein Spiegelschrankmodul gemäss der Erfindung mit einem Reflektor 5, der drehbeweglich um Höhenachse H an einem Korpus 11 befestigt ist. Der Korpus 11 umfasst eine Seitenwand 16 und eine Leuchtenwand 17. Der Leuchtenwand 17 umfasst Lichtquelle 3 (nicht sichtbar) in eine Nut. Die Nut der Leuchtenwand 17 ist gleichzeitig die Abschirmung 4 (nicht sichtbar). Der Betrachtungsbereich 6 ist gleichzeitig die Rückwand des Korpus 11. Alternativ hierzu kann die Rückseite eines weiteren Reflektors 5, der neben den Spiegelmodul angeordnet ist, als Betrachtungsbereich 6 verwendet werden. Die Rückseite des Reflektors 5 ist ebenfalls eine Spiegelfläche.

Figur 7 zeigt das Modul aus Figur 6, wobei die Reflektorfläche 5 zusätzlich einen Vergrösserungsspiegel 15 aufweist. Alternativ kann der Vergrösserungsspiegel 15 auch nur ein normaler Betrachtungsbereich 6 sein.

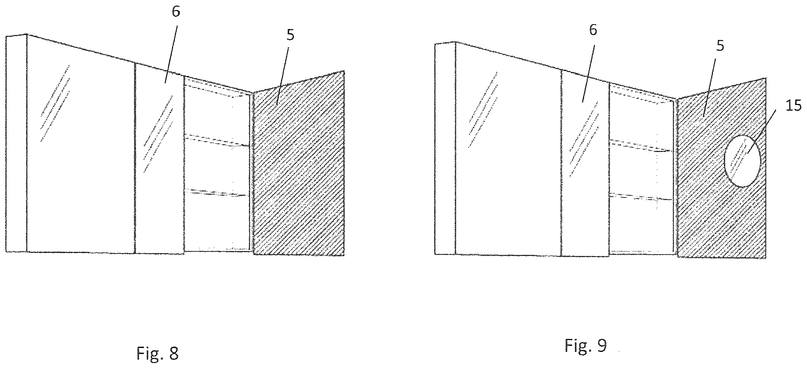

Figur 8 zeigt eine Spiegelvorrichtung 1, die ein Spiegelmodul gemäss Figur 6 umfasst. Die Spiegelvorrichtung umfasst insgesamt 2 Flügel, wobei die beiden Flügel je eine Reflektorfläche 5 umfassen. Die mittlere Spiegelfläche ist ein Betrachtungsbereich 6. Die Darstellung gemäss Figur 8 entspricht weiterhin den Schnitt aus Figur 4, wobei der Reflektor 5 keine Rückseiten Betrachtungsbereiche umfasst.

Figur 9 entspricht der Spiegelvorrichtung 1 aus Figur 8 wobei der Reflektor 5 zusätzlich einen Vergrösserungsspiegel 15 umfasst.

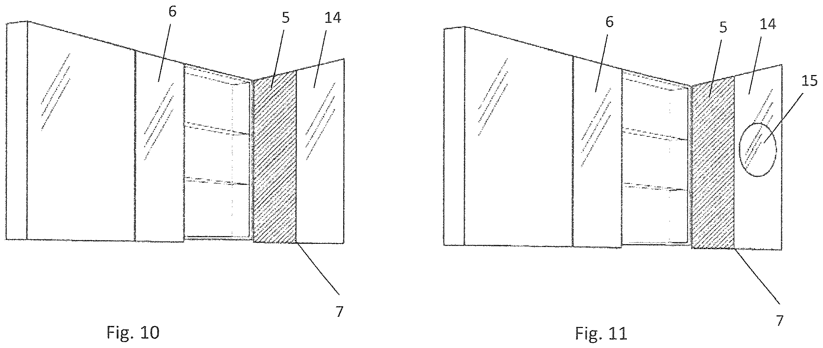

Figur 10 entspricht der Schnittdarstellung aus Figur 4, wobei die Spiegelvorrichtung 1 zwei Flügel und einen Betrachtungsbereich 6 umfasst. Die Flügel weisen jeweils einen Reflektor 5 und Rückseitenbetrachtungsbereich 14 auf. Der mittlere Bereich ist ein Betrachtungsbereich 6, vor dem sich die Person 2 (nicht dargestellt) bei Öffnung beider Flügel 7 beidseitig seitlich ausgeleuchtet betrachten kann.

Figur 11 entspricht der Ausführungsform aus Figur 10, wobei die Spiegelvorrichtung 1 gemäss Figur 11 zusätzlich einen Vergrösserungsspiegel 15 auf dem Rückseitenbetrachtungsbereich 14 umfasst. Der Vergrösserungsspiegel 15 ist auf der Fläche der Rückseiten Betrachtungsbereiches 14 aufgeklebt.

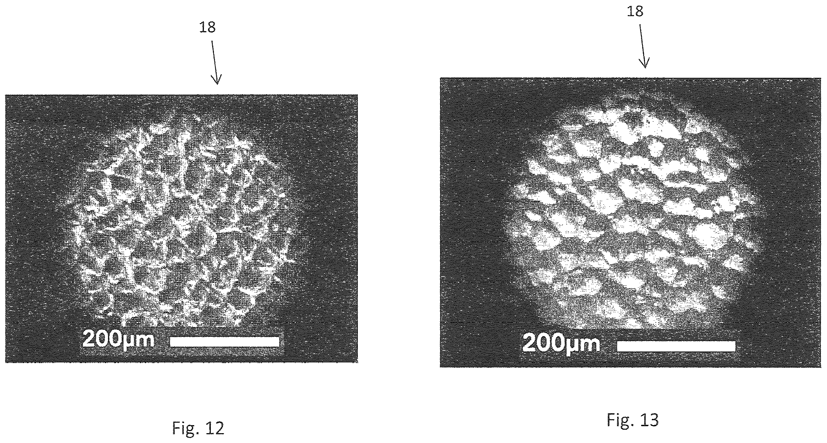

Figur 12 zeigt eine mikroskopische Aufnahme einer Diffusoroberfläche 8. Die Diffusoroberfläche 8 wurde mit einem liquiden oder pastösen Ätzmittel behandelt, so dass Kavitäten entstehen. Die Kavitäten weisen unterschiedliche Formen und unterschiedliche Tiefen sowie unterschiedliche Ausdehnungen auf. Die grösste Ausdehnung der einzelnen Kavitäten ist kleiner als 100 um. Die Tiefe der Kavitäten liegt im Bereich von kleiner als 30 um. Durch eine derartige Oberfläche wird das Licht optimal gestreut und es entstehen keine Schatten.

Figur 13 entspricht eine Diffusoroberfläche 8 gemäss Figur 12 in einer zweiten Aufnahme.

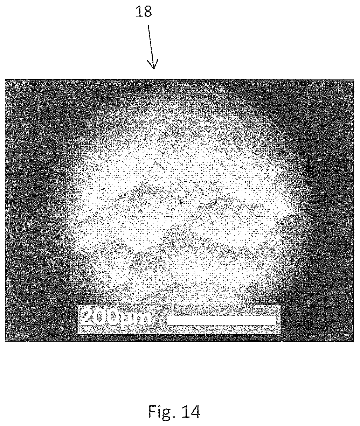

Figur 14 entspricht eine mikroskopische Aufnahme einer Diffusoroberfläche 8, wobei in diesem Fall die Oberfläche mit einem geschäumten Ätzmittel behandelt worden ist. Durch den Schaum entstehen grössere Ausdehnungen der Kavitäten sowie eine weichere Oberfläche durch weniger kantige Kavitäten. Weiterhin sind die durch Schaumätzung entstehenden Kavitäten etwas flacher ausgebildet als die mit liquiden Ätzmittel geätzten Kavitäten. Für die Ätzungen ist es weiterhin denkbar Ätzpaste oder Ätzcreme zu verwenden. Als Ätzmittel kann beispielsweise Ammoniumhydrogendifluorid und/oder Flusssäure verwendet werden.

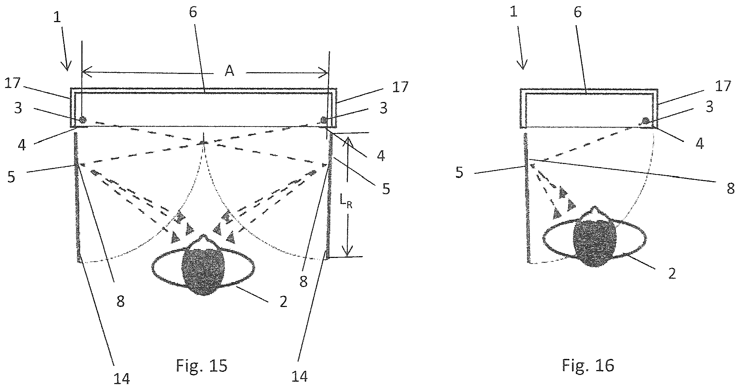

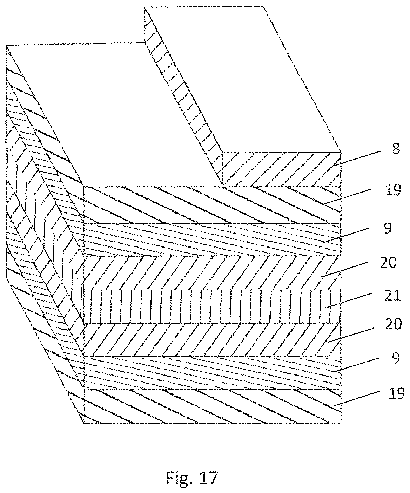

Figur 15 zeigt eine Spiegelvorrichtung 1 in Form eines aufklappbaren Spiegels. Die Spiegelvorrichtung umfasst zwei Lichtquellen 3, zwei Abschirmungen 4 sowie zwei Reflektoren 5. Die Lichtquellen 3 sind hierbei bevorzugt in einer Nut in der Leuchtenwand 17 angeordnet. Weiterhin können die Lichtquellen 3 in der Nut durch eine Diffusorscheibe abgedeckt sein. Für den Fall, dass die Lichtquellen 3 in einer Nut angeordnet sind, bildet die Seitenwand der Nut die Abschirmung 4. Andernfalls ist eine zusätzliche Abschirmung 4 ausgebildet. Die Lichtquellen 3 strahlen somit Licht auf den jeweils gegenüberliegenden Reflektor 5, der wiederum das Licht auf die Person 2 reflektiert. Die Abschirmung 4 ist zwischen Lichtquelle 3 und Person 2 angeordnet, so dass kein direktes Licht von der Lichtquelle 3 zu Person 2 gelangen kann. Die Lichtquelle 3 ist bevorzugt eine LED. Der Reflektor 5 weist eine Diffusoroberfläche 8 auf, die das Licht von der Lichtquelle 3 streut. Hierzu weist die Diffusoroberfläche 8 Kavitäten, insbesondere konkaven Kavitäten, auf, die unterschiedlich gross und unterschiedlich tief ausgebildet sind, so dass das Licht zufällig gestreut wird. Der Reflektor 5 weist gegenüberliegend von der Diffusoroberfläche 8 eine Reflektionsschicht 9 (siehe Figur 17) auf, die bevorzugt aus einer Silberschicht besteht. Ein derartiger Reflektor weist wenig Lichtverlust auf, und führt zu einem weichen, schattenfreien Licht. Die Spiegelvorrichtung 1 umfasst weiterhin einen Korpus 11. Die Rückwand des Korpus ist ein Betrachtungsbereich 6. Der Korpus 11 umfasst weiter zwei Leuchtenwände 17. An den Leuchtenwänden 17 ist der Reflektor 5 über ein Drehscharnier befestigt. Somit kann der Reflektor 5 auf- und zugeklappt werden. Der Reflektor 5 bildet den Flügel 7. Der Betrachtungsbereich 6 ist der Bereich, in dem die Person 2 sich im Spiegel betrachten kann. Der Betrachtungsbereich 6 umfasst keine Diffusoroberfläche 8. Der Reflektor 5 kann nur teilweise mit einer Diffusoroberfläche 8 versehen sein, wobei in diesem Fall der äussere Bereich des Flügels als Rückseitenbetrachtungsbereich 14 ausgebildet ist. Für den Betrachter ist in diesem Fall die Lichtquelle 3 im Rückseitenbetrachtungsbereich 14 nicht direkt sichtbar, so dass Blendungen vermieden werden. Die Spiegelvorrichtung 1 ist in einer geöffneten Position gezeigt. Der Abstand A zwischen Lichtquelle 3 und zugehörigem Reflektor 5, der sich gegenüberliegend befindet, ist grösser als die Längenausdehnung L_{R} des Reflektors 5. Die Details dieser Spiegelvorrichtung sind in den vorgängigen Figuren ebenfalls dargestellt, so dass diese nachfolgend nicht nochmalig beschrieben werden.

Fig. 16 zeigt eine Spiegelvorrichtung analog zu Fig. 15, wobei anstatt zwei Lichtquellen 3, und zwei Reflektoren 5 nur je eine Lichtquelle 3 und ein Reflektor 5 ausgebildet ist.

Fig. 17 zeigt einen Schnitt durch den Aufbau eines Reflektors 5, wobei eine Diffusoroberfläche 8 auf einer Glasschicht 19 ausgebildet ist. Die Glasschicht 19 weist auf ihrer Rückseite eine Reflektionsschicht 9 auf, die durch eine Silberschicht gebildet wird. Denkbar sind auch anderer reflektierende Materialien wie Aluminium oder ähnliches. Die Reflektionsschicht wird durch eine Schutzschicht 20 geschützt. Eine Verbindungsschicht 21, beispielsweise eine Klebeschicht, verbindet die Schutzschicht 20 mit einer zweiten Schutzschicht 20, die wiederum eine zweite Reflektionsschicht 9 schützt. Die zweite Reflektionsschicht 9 ist durch eine weitere Glasschicht 19 abgedeckt, so dass ein zweiseitiger Spiegel entsteht, wobei nur auf einer Seite eine Diffusoroberfläche 8 ausgebildet ist.

## Patentansprüche

1. Spiegelvorrichtung (1) zur Betrachtung einer Person (2) in einem Spiegel, umfassend eine Lichtquelle (3), eine Abschirmung (4) zur Abschirmung von direktem Licht zwischen Person (2) und Lichtquelle (3), einen Reflektor (5) zur Reflexion des durch die Lichtquelle (3) erzeugten Lichtes und mindestens einen Betrachtungsbereich (6) in dem sich die Person (2) betrachten kann, wobei die Abschirmung (4) derartig zwischen Person und Lichtquelle angeordnet ist, dass kein direktes Licht zur Person (2) gelangt und
- der Reflektor (5) entweder im Wesentlichen in einer Ebene mit dem Betrachtungsbereich (6) angeordnet ist und so einen Flügel bildet, und/oder
- der Betrachtungsbereich (6) Teil der Abschirmung (4) ist, so dass der Reflektor (5) beim Betrachten des Betrachtungsbereiches (6) durch die Person (2) jeweils seitlich anordenbar ist, wobei der Reflektor beweglich mit einem Korpus oder einer Rückwand der Spiegelvorrichtung verbunden ist und/oder
- der Betrachtungsbereich hinter der Lichtquelle angeordnet ist und die Lichtquelle durch eine zweite Abschirmung zum Betrachtungsbereich abgeschirmt ist, wobei der Reflektor (5) eine Diffusoroberfläche (8) aufweist, die die eintreffende Strahlung der Lichtquelle (3) streut,
wobei die Diffusoroberfläche (8) Kavitäten aufweist, die bevorzugt uneinheitlich, insbesondere bevorzugt zufällig verteilt ausgebildet sind, wobei der Reflektor plan ausgebildet ist und eine Schutzschicht, eine Reflektionsschicht und eine Glasschicht umfasst, wobei die Glasschicht die Diffusoroberfläche umfasst.

2. Spiegelvorrichtung (1) nach Anspruch 1, **dadurch gekennzeichnet, dass** die Reflektionsschicht (9) einen Abstand zur Diffusoroberfläche (8) aufweist, der kleiner als 1 cm, insbesondere kleiner als 0.8cm ist.

3. Spiegelvorrichtung (1) nach Anspruch 2, **dadurch gekennzeichnet, dass** die Längenausdehnung des Reflektors L_{R} mindestens einem Viertel des Abstandes A des Reflektors (5) von der Lichtquelle (3), bevorzugt mindestens einer Hälfte des Abstandes A des Reflektors (5) von der Lichtquelle (3), insbesondere bevorzugt im Wesentlichen der Hälfte des Abstandes A des Reflektors (5) von der Lichtquelle (3) entspricht.

4. Spiegelvorrichtung (1) nach einem der vorhergehenden Ansprüche, **dadurch gekennzeichnet, dass** an der Rückwand (10) und/oder am Korpus (11) eine oder mehrere Beleuchtungseinrichtungen (12) derart angeordnet sind, dass ein Raum indirekt beleuchtbar ist und bevorzugt im Wesentlichen kein direktes Licht auf eine Person vor der Spiegelvorrichtung (1) in einem montierten Zustand gelangt, wobei insbesondere die eine oder mehrere Beleuchtungseinrichtungen (12) in einer Nut versenkt sind.

5. Spiegelvorrichtung (1) nach einem der vorhergehenden Ansprüche, **dadurch gekennzeichnet, dass** durch ein Bewegen des Reflektors (5), insbesondere des Flügels (7), einen Schalter (13) betätigbar ist, so dass beim Öffnen der Spiegelvorrichtung (1) die Lichtquelle (3) einschaltet, bevorzugt mit einer Dimmschaltung, und beim Schliessen der Spiegelvorrichtung (1) die Lichtquelle ausschaltet, bevorzugt mit einer Dimmschaltung.

6. Spiegelvorrichtung (1) nach einem der vorhergehenden Ansprüche, **dadurch gekennzeichnet, dass** eine Rückseite des Reflektors (5), bevorzugt des Flügels (7), zumindest teilweise durch einen Spiegel gebildet wird.

7. Spiegelvorrichtung (1) nach einem der vorhergehenden Ansprüche, **dadurch gekennzeichnet, dass** zwei Lichtquellen (3), bevorzugt hinter einer gemeinsamen Abschirmung (4), die insbesondere bevorzugt ein Betrachtungsbereich (6) ist, zwei Reflektoren (5) und bevorzugt zwei Rückseitenbetrachtungsbereiche (14), jeweils in einer Ebene mit einem Reflektor (5) aufweist.

8. Spiegelvorrichtung (1) nach einem der vorhergehenden Ansprüche, **dadurch gekennzeichnet, dass** der Reflektor (5) oder der Betrachtungsbereich (6) einen Vergrösserungsspiegel (15) umfasst.

9. Spiegelvorrichtung (1) nach einem der vorhergehenden Ansprüche, **dadurch gekennzeichnet, dass** die Spiegelvorrichtung (1) einen Korpus (11) umfasst, der zumindest eine Seitenwand (16) aufweist, an der ein Reflektor (5) angeordnet oder befestigt ist und eine gegenüberliegende Leuchtenwand (17) aufweist, in der die Lichtquelle (3) angeordnet ist.

10. Spiegelvorrichtung nach Anspruch 9, **dadurch gekennzeichnet, dass** zwei oder mehr Seitenwände (16) und zwei oder mehr Leuchtenwände (17) ausgebildet sind, wobei die Anzahl der Seitenwände (16) der Anzahl der Leuchtenwände (17) entspricht.

11. Verfahren zur Herstellung einer Spiegelvorrichtung (1) gemäss einem der vorhergehenden Ansprüche umfassend die Schritte
- Anordnen einer Lichtquelle (3) hinter einer Abschirmung (4),
- Anordnen eines Reflektors (5) in einem Abstand A zu der Lichtquelle, wobei der Abstand A grösser ist als die Längenausdehnung L_{R} des Reflektors, und derartig, dass Licht von der Lichtquelle (3) auf den Reflektor (5) trifft,
- Anordnen eines Betrachtungsbereiches (6) für eine Person in einer Ebene mit dem Reflektor (5) oder als Abschirmung (4) für die Lichtquelle (3), wobei der Reflektor eine Diffusoroberfläche (8) mit konkaven Strukturen aufweist, die die eintreffende Strahlung der Lichtquelle (3) streut.

12. Verfahren zum Betrachten einer Person in einer Spiegelvorrichtung (1) gemäss einem der Ansprüche 1 bis 10, umfassend die Schritte
- Erzeugen von Licht durch eine Lichtquelle (3)
- Reflektieren des Lichtes durch einen Reflektor (5) von der Lichtquelle (3) auf eine Person (2), wobei der Reflektor (5) das Licht reflektiert und streut, insbesondere durch Lichtbrechung an einer Diffusoroberfläche (8).

## Claims

1. A mirror device (1) for viewing a person (2) in a mirror, comprising a light source (3), a screen (4) for screening direct light between the person (2) and the light source (3), a reflector (5) for reflecting the light generated by the light source (3), and at least one viewing area (6) in which the person (2) can view himself, wherein the screen (4) is arranged between the person and the light source in such a way that no direct light reaches the person (2), and
- the reflector (5) is arranged either substantially in one plane with the viewing area (6), thus forming a wing, and/or
- the viewing area (6) is part of the screen (4), so that the reflector (5) can respectively be arranged laterally when the person (2) is viewing the viewing area (6), wherein the reflector is movably connected to a body or a rear wall of the mirror device and/or
- the viewing area is located behind the light source and the light source is shielded from the viewing area by a second screen,
wherein the reflector (5) has a diffusor surface (8) which scatters the incoming radiation of the light source (3), wherein the diffusor surface (8) has cavities which are preferably non-uniformly, in particular preferably randomly distributed, wherein the reflector is designed to be flat and comprises a protective layer, a reflecting layer and a glass layer, wherein the glass layer comprises the diffusor surface.

2. Mirror device (1) according to claim 1, **characterized in that** the reflecting layer (9) has a distance to the diffusor surface (8) which is less than 1 cm, in particular less than 0.8 cm.

3. Mirror device (1) according to claim 2, **characterized in that** the longitudinal extension of the reflector LR corresponds to at least one quarter of the distance A of the reflector (5) from the light source (3), preferably at least one half of the distance A of the reflector (5) from the light source (3), in particular preferably substantially half of the distance A of the reflector (5) from the light source (3).

4. Mirror device (1) according to one of the preceding claims, **characterized in that** one or more lighting devices (12) are arranged on the rear wall (10) and/or on the body (11) in such a way that a space can be indirectly illuminated and preferably substantially no direct light reaches a person in front of the mirror device (1) in a mounted state, in particular the one or more lighting devices (12) are arranged recessed in a groove.

5. Mirror device (1) according to one of the preceding claims, **characterized in that** a switch (13) can be actuated by moving the reflector (5), in particular the wing (7), so that by opening the mirror device (1) the light source (3) switches on, preferably with a dimmer circuit, and by closing the mirror device (1) the light source switches off, preferably with a dimmer circuit.

6. Mirror device (1) according to one of the preceding claims, **characterized in that** a rear side of the reflector (5), preferably of the wing (7), is at least partially formed by a mirror.

7. Mirror device (1) according to one of the preceding claims, **characterized in that** two light sources (3), preferably behind a common screen (4), which is in particular preferably a viewing area (6), has two reflectors (5) and preferably two rear viewing areas (14), each in a plane with a reflector (5).

8. Mirror device (1) according to one of the preceding claims, **characterized in that** the reflector (5) or the viewing area (6) comprises a magnifying mirror (15).

9. Mirror device (1) according to one of the preceding claims, **characterized in that** the mirror device (1) comprises a body (11) having at least one side wall (16) on which a reflector (5) is arranged or fixed and having an opposite light wall (17) in which the light source (3) is arranged.

10. Mirror device according to claim 9, **characterized in that** two or more side walls (16) and two or more light walls (17) are formed, the number of side walls (16) corresponding to the number of light walls (17).

11. Method of manufacturing a mirror device (1) according to any one of the preceding claims comprising the steps of
- arranging a light source (3) behind a screen (4),
- arranging a reflector (5) at a distance A from the light source, the distance A being greater than the longitudinal extension LR of the reflector, and such that light from the light source (3) hits the reflector (5),
- arranging a viewing area (6) for a person in a plane with the reflector (5) or as a screen (4) for the light source (3), the reflector having a diffusor surface (8) with concave structures which scatters incoming radiation from the light source (3).

12. Method of viewing a person in a mirror device (1) according to any one of claims 1 to 10, comprising the steps of
- generating light by a light source (3)
- reflecting the light by a reflector (5) from the light source (3) onto a person (2), wherein the reflector (5) reflects and scatters the light, in particular by light refraction at a diffuser surface (8).

## Revendications

1. Dispositif de miroir (1) pour l'observation d'une personne (2) dans un miroir, comprenant une source de lumière (3), un écran (4) pour bloquer la lumière directe entre la personne (2) et la source de lumière (3), un réflecteur (5) pour réfléchir la lumière générée par la source de lumière (3) et au moins une zone d'observation (6) dans laquelle la personne (2) peut s'observer, l'écran (4) étant disposé entre la personne et la source de lumière de telle sorte qu'aucune lumière directe ne parvienne à la personne (2) et que l'écran (4) puisse être utilisé pour bloquer la lumière directe et
- le réflecteur (5) est disposé soit sensiblement dans le même plan que la zone d'observation (6), formant ainsi une aile, et/ou
- la zone d'observation (6) fait partie de l'écran (4), de sorte que le réflecteur (5) peut être placé latéralement lorsque la personne (2) observe la zone d'observation (6), le réflecteur étant relié de manière mobile à un corps ou à une paroi arrière du dispositif de miroir et/ou
- la zone d'observation est disposée derrière la source de lumière et la source de lumière est protégée par un deuxième écran par rapport à la zone d'observation,
le réflecteur (5) présente une surface du diffuseur (8) qui diffuse le rayonnement entrant de la source de lumière (3), la surface du diffuseur (8) présentant des cavités qui sont réalisées de préférence de manière non uniforme, en particulier de préférence réparties de manière aléatoire, le réflecteur étant réalisé de manière plane et comprenant une couche de protection, une couche de réflexion et une couche de verre, la couche de verre comprenant la surface du diffuseur.

2. Dispositif de miroir (1) selon la revendication 1, **caractérisé en ce que** la couche de réflexion (9) présente une distance à la surface du diffuseur (8) qui est inférieure à 1 cm, en particulier inférieure à 0,8 cm.

3. Dispositif de miroir (1) selon la revendication 2, **caractérisé en ce que** l'extension longitudinale du réflecteur LR correspond au moins à un quart de la distance A du réflecteur (5) à la source de lumière (3), de préférence à au moins une moitié de la distance A du réflecteur (5) à la source de lumière (3), en particulier de préférence essentiellement à la moitié de la distance A du réflecteur (5) à la source de lumière (3).

4. Dispositif de miroir (1) selon l'une des revendications précédentes, **caractérisé en ce qu'**un ou plusieurs dispositifs d'éclairage (12) sont disposés sur la paroi arrière (10) et/ou sur le corps (11) de telle sorte qu'un espace puisse être éclairé indirectement et que, de préférence, aucune lumière directe ne parvienne pour l'essentiel à une personne située devant le dispositif de miroir (1) à l'état monté, le ou les dispositifs d'éclairage (12) étant notamment encastrés dans une rainure.

5. Dispositif de miroir (1) selon l'une des revendications précédentes, **caractérisé en ce qu'**un interrupteur (13) peut être actionné par un déplacement du réflecteur (5), en particulier de l'aile (7), de sorte que, lors de l'ouverture du dispositif de miroir (1), la source de lumière (3) s'allume, de préférence avec un circuit de gradation, et lors de la fermeture du dispositif de miroir (1), la source de lumière s'éteint, de préférence avec un circuit de gradation.

6. Dispositif de miroir (1) selon l'une des revendications précédentes, **caractérisé en ce qu'**une face arrière du réflecteur (5), de préférence de l'aile (7), est formée au moins partiellement par un miroir.

7. Dispositif de miroir (1) selon l'une des revendications précédentes, **caractérisé en ce que** deux sources de lumière (3), de préférence derrière un écran commun (4), qui est notamment de préférence une zone d'observation (6), présentent deux réflecteurs (5) et de préférence deux zones d'observation arrière (14), chacune dans un plan avec un réflecteur (5) .

8. Dispositif de miroir (1) selon l'une quelconque des revendications précédentes, **caractérisé en ce que** le réflecteur (5) ou la zone d'observation (6) comprend un miroir grossissant (15) .

9. Dispositif de miroir (1) selon l'une des revendications précédentes, **caractérisé en ce que** le dispositif de miroir (1) comprend un corps (11) présentant au moins une paroi latérale (16) sur laquelle est disposé ou fixé un réflecteur (5) et présentant une paroi lumineuses opposée (17) dans laquelle est disposée la source de lumière (3).

10. Dispositif de miroir selon la revendication 9, **caractérisé en ce que** deux parois latérales (16) ou plus et deux parois lumineuses (17) ou plus sont formées, le nombre de parois latérales (16) correspondant au nombre de parois lumineuses (17) .

11. Procédé de fabrication d'un dispositif de miroir (1) selon l'une quelconque des revendications précédentes, comprenant les étapes consistant à
- Disposer une source de lumière (3) derrière un écran (4),
- Disposer un réflecteur (5) à une distance A de la source de lumière, la distance A étant supérieure à l'extension longitudinale LR du réflecteur, et de telle sorte que la lumière provenant de la source de lumière (3) soit incidente sur le réflecteur (5),
- Disposer une zone d'observation (6) pour une personne dans un plan avec le réflecteur (5) ou comme écran (4) pour la source de lumière (3), le réflecteur présentant une surface du diffuseur (8) avec des structures concaves qui diffusent le rayonnement entrant de la source de lumière (3).

12. Procédé d'observation d'une personne dans un dispositif de miroir (1) selon l'une quelconque des revendications 1 à 10, comprenant les étapes consistant à
- Génération de lumière par une source de lumière (3).
- Réflexion de la lumière par un réflecteur (5) de la source de lumière (3) sur une personne (2), le réflecteur (5) réfléchissant et diffusant la lumière, notamment par réfraction sur une surface de diffuseur (8) .
